# EUROPEAN PATENT APPLICATION

(11) **EP 4 067 156 A1**
(43) Date of publication of application: **05.10.2022**
(21) Application number: 21206675.7
(22) Date of filing: 05.11.2021
(51) Int. Cl.: B60L 53/16, B60L 53/10

(54) **VEHICLE CHARGING BASE, VEHICLE CHARGING BASE CONTROL METHOD, AND VEHICLE**

(30) Priority: 02.04.2021 CN 202110362851
(71) Applicant: Zhaoqing Xiaopeng New Energy Investment Co., Ltd., Zhaoqing Hi-Tech Industrial Development Zone Zhaoqing (CN)
(72) Inventor: LIANG, Qiang, Zhaoqing (CN)
(74) Representative: Yip, Matthew Wing Yu

(57) **Abstract**

A vehicle charging base, a vehicle charging base control method and a vehicle are provided. The vehicle charging base includes a fixed seat, a sliding seat, a driving mechanism, a transmission mechanism, a first charging inlet and a second charging inlet. The fixed seat is adapted to be fixed to a body of a vehicle. The sliding seat is movably arranged on the fixed seat. The driving mechanism is arranged on the fixed seat. The transmission mechanism is movably connected between a power output end of the driving mechanism and the sliding seat. The first charging inlet and the second charging inlet are both arranged on the sliding seat, and the driving mechanism is configured to drive the transmission mechanism to move the sliding seat, such that the two charging inlets move along a preset trajectory relative to the fixed seat. charging inlet

## Description

### Field of Invention

The present disclosure relates to the technical field of vehicle charging, in particular to a vehicle charging base, a vehicle charging base control method, and a vehicle.

### Background

In recent years, with the continuous development of electric power technology, the popularity of new energy vehicles has increased significantly. Currently, new energy vehicles usually need to be connected to charging piles, and charging piles in turn supply power to new energy vehicles. In the existing technologies, in order to optimize using experience of new energy vehicles, a new energy vehicle is usually provided with both a fast charging port and a slow charging port, and when presented with the fast charging port and the slow charging port, a user can choose one of the charging ports for charging. This makes it possible to select a corresponding charging port based on a charging scenario, but can lead to a relatively large opening for exposing the charging ports on new energy vehicles, which is not conducive to the integrated presentation of vehicles and increases difficulty in vehicle design.

### Summary of Invention

In view of the above problems, the present disclosure provides a vehicle charging base, a vehicle charging base control method, and a vehicle, to alleviate or solve one of the above problems.

In a first aspect, an embodiment of the present disclosure provides a vehicle charging base. The vehicle charging base includes a fixed seat, a sliding seat, a driving mechanism, a transmission mechanism, a first charging inlet and a second charging inlet. The fixed seat is adaptive to be fixed to a body of a vehicle. The sliding seat is movably arranged on the fixed seat. The driving mechanism is arranged on the fixed seat. The transmission mechanism is movably connected between a power output end of the driving mechanism and the sliding seat. The first charging inlet and the second charging inlet are both arranged on the sliding seat, and the driving mechanism is configured to drive the transmission mechanism to put the sliding seat into movement, such that the first charging inlet and the second charging inlet move along a preset trajectory relative to the fixed seat.

In a second aspect, an embodiment of the present disclosure provides a vehicle charging base control method. The vehicle charging base control method is applicable to a vehicle charging base including at least two movable charging inlets. The vehicle charging base control method includes: acquiring a charging mode selection signal; determining a target charging inlet from the at least two charging inlets based on the charging mode selection signal; and controlling the target charging inlet to move to a target position, a charging inlet in the target position being capable of being connected with an external charger.

In a third aspect, an embodiment of the present disclosure provides a vehicle. The vehicle includes a vehicle body and the vehicle charging base provided in the above embodiment. The vehicle charging base is arranged in the body.

In a fourth aspect, an embodiment of the present disclosure provides a vehicle. The vehicle includes a vehicle charging base having at least two movable charging inlets. The vehicle further includes: a memory; one or more processors coupled with the memory; and one or more programs. The one or more programs are stored in the memory, configured to be executed by the one or more processors, and configured to implement the vehicle charging base control method provided in the above embodiment.

Compared with the existing technologies, the vehicle charging base, the vehicle charging base control method and the vehicle provided in the embodiments of the present disclosure can enable the sliding seat to move under the driving effect of the driving mechanism, and enable the first charging inlet and the second charging inlet arranged on the sliding seat to move along the preset trajectory relative to the fixed seat. In this way, when the vehicle charging base is arranged in a body of a vehicle, the vehicle is provided with two charging inlets, and at the same time, only one opening corresponding to the size of the charging inlet needs to be reserved on the vehicle, which effectively reduces the size of the opening on the vehicle, and improves aesthetic effect of the entire vehicle. Meanwhile, there is no need to make a design specific to an opening on a vehicle designed for two charging inlets, and it is only necessary to retain the original structure of the charging inlet part in the vehicle under the original single charging inlet. Difficulty in designing a vehicle body structure is thus reduced.

These and other aspects of the present disclosure will become more apparent and understandable from the description of the following embodiments.

### Brief Description of Drawings

In order to allow technical solutions of the present disclosure to be clearly illustrated, the accompanying drawings used in the description of the embodiments will be briefly introduced below. Apparently, the accompanying drawings described below are merely some embodiments of the present disclosure. For those skilled in the art, other accompanying drawings can be obtained based on these accompanying drawings without any creative effort.
Fig. 1 shows a schematic diagram of an application environment of a vehicle charging base provided in an embodiment of the present disclosure.
Fig. 2 shows a structural schematic diagram of a vehicle charging base provided in an embodiment of the present disclosure.
Fig. 3 shows another structural schematic diagram of the vehicle charging base shown in Fig. 2.
Fig. 4 shows an exploded structural schematic diagram of the vehicle charging base shown in Fig. 3 from a viewing angle.
Fig. 5 shows an exploded structural schematic diagram of the vehicle charging base shown in Fig. 3 from another viewing angle.
Fig. 6 shows still another structural schematic diagram of the vehicle charging base shown in Fig. 3.
Fig. 7 shows a structural schematic diagram of a driving mechanism in the vehicle charging base shown in Fig. 2.
Fig. 8 shows an exploded structural schematic diagram of the driving mechanism shown in Fig. 7.
Fig. 9 shows a structural schematic diagram of the vehicle charging base shown in Fig. 2 in a side view.
Fig. 10 shows a flowchart of a vehicle charging base control method provided in an embodiment of the present disclosure.
Fig. 11 shows a flowchart of controlling a charging inlet in the vehicle charging base control method shown in Fig. 10.
Fig. 12 shows a flowchart of controlling a driving mechanism based on a changing amount of current in the method of controlling a vehicle charging inlet shown in Fig. 10.
Fig. 13 shows a block diagram of functional modules of a vehicle provided in an embodiment of the present disclosure.

### Detailed Description

In order to enable those skilled in the art to better understand solutions of the present disclosure, the technical solutions in embodiments of the present disclosure will be described clearly and completely below in combination with accompanying drawings in the embodiments of the present disclosure.

The technical solutions in the embodiments of the present disclosure will be clearly and completely described below in combination with accompanying drawings in the embodiments of the present disclosure. Obviously, the described embodiments are a part, but not all, of the embodiments of the present disclosure. Based on the embodiments in the present disclosure, all of the other embodiments obtained by those skilled in the art without any creative labor shall all fall within the protection scope of the present disclosure.

At present, as the types of new energy vehicles increase, different new energy vehicles have different charging demands. Thus, in order to satisfy charging demands of different new energy vehicles, different types of charging piles need to be set up (e.g., charging piles with fast charging chargers, charging piles with slow charging chargers, etc.). In order to increase charging diversity of new energy vehicles, there appear on the market vehicles provided with both a fast charging inlet and a slow charging inlet, by means of which one can choose either a fast charging charger or a slow charging charger for charging a vehicle. Providing two charging inlets at the same time can make it more convenient for a user to charge a vehicle, but can also lead to a relatively large opening on the vehicle, which requires an extension to the original opening designed for one charging inlet as well as redesigning of the original body structure of the vehicle. This increases difficulty in vehicle design, and meanwhile the relatively large opening can affect the aesthetic effect of the entire vehicle, which is not helpful for promotion of the vehicle.

In order to better solve the above-described problems, the inventor of the present disclosure concentrated on research and development as well as studies on how to reduce the size of the opening on the vehicle body while providing two charging inlets on the vehicle. The inventor then proposed a vehicle charging base of the present disclosure. The vehicle charging base includes a fixed seat, a sliding seat, a driving mechanism, a transmission mechanism, a first charging inlet, and a second charging inlet. The fixed seat is adaptive to be fixed to a body of a vehicle. The sliding seat is movably arranged on the fixed seat. The driving mechanism is arranged on the fixed seat. The transmission mechanism is movably connected between a power output end of the driving mechanism and the sliding seat. Both the first charging inlet and the second charging inlet are arranged on the sliding seat. The driving mechanism is configured to drive the transmission mechanism to put the sliding seat into movement, such that the first charging inlet and the second charging inlet move along a preset trajectory relative to the fixed seat. Through the implementation of the present disclosure, the sliding seat can move under the driving effect of the driving mechanism, and the first charging inlet and the second charging inlet arranged in the sliding seat can move along a preset trajectory relative to the fixed seat. In this way, when the vehicle charging base is arranged in the vehicle body, the vehicle is provided with two charging inlets, and meanwhile only one opening corresponding to a size of the charging inlet needs to be reserved on the vehicle. This effectively reduces the size of the opening on a vehicle, and improves the aesthetic effect of the entire vehicle. Furthermore, there is no need to make a design specific to an opening on a vehicle designed for two charging inlets, and it is only necessary to retain the original structure of the charging inlet part in the vehicle under the original single charging inlet. Difficulty in designing a vehicle body structure is thus reduced.

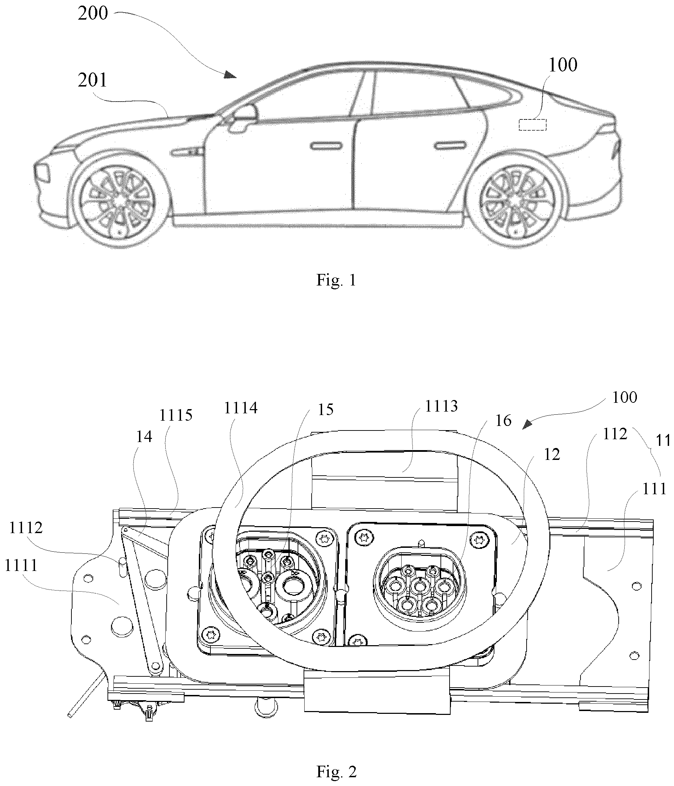

Referring to Fig. 1, an embodiment of the present disclosure provides a vehicle charging base 100 and a vehicle 200 to which the vehicle charging base is applied. As shown in Figs. 2 to 5, the vehicle charging base 100 in the embodiment of the present disclosure may include a fixed seat 11, a sliding seat 12, a driving mechanism 13, a transmission mechanism 14, a first charging inlet 15, and a second charging inlet 16. The fixed seat 11 is adaptive to be fixed to a body of the vehicle 200. The sliding seat 12 is movably arranged on the fixed seat 11. The driving mechanism 13 is arranged on the fixed seat 11. The transmission mechanism 14 is movably connected between a power output end of the driving mechanism 13 and the sliding seat 12. The first charging inlet 15 and the second charging inlet 16 are both arranged on the sliding seat 12. The driving mechanism 13 is configured to drive the sliding seat 12 to move, such that the first charging inlet 15 and the second charging inlet 16 move along the preset trajectory relative to the fixed seat 11. Thus, by means of the first charging inlet 15 and the second charging inlet 16, it is possible to charge the vehicle to at different power levels using different chargers.

In the present embodiment, the vehicle 200 may be a transportation vehicle that uses electric energy to drive a motor to operate. For example, the transportation vehicle may be a battery electric vehicle, an extended-range electric vehicle, a hybrid electric vehicle, etc. The type and function of the transportation vehicle are not specifically limited herein.

In the present embodiment, the material of the fixed seat 11 is not specifically limited, and a corresponding material may be selected based on actual application requirements. For example, the material of the fixed seat 11 may include one or more of a plastic material, a metal material, an inorganic cementing material, and a wood material. In addition, the fixed seat 11 may be fixed to the body of the vehicle 200 by way of screwing, riveting, welding, etc. Therefore, the fixed seat 11 may be provided with a fixing member for fixed connection with the body of the vehicle 200. The type of the fixing member may be set based on actual requirements of the fixed connection between the fixed seat 11 and the body of the vehicle 200.

Further, the fixed seat 11 may include a member adapted for movement of the sliding seat 12. The specific construction of the member may be set based on the movement manner of the sliding seat 12, and the member is not specifically limited herein. For example, when the sliding seat 12 is capable of a reciprocating movement in a certain linear direction on the fixed seat 11, the fixed seat 11 may include a sliding rail, and the sliding seat 12 may be provided with a roller, the sliding rail being capable of cooperating with the roller, such that the sliding seat 12 is movable on the fixed seat 11; or, the fixed seat 11 may include a roller, and the sliding seat 12 may be provided with a sliding rail, the roller being capable of cooperating with the sliding rail, such that the sliding seat 12 is movable on the fixed seat 11. When the sliding seat 12 is capable of a circular movement on the fixed seat 11, the fixed seat 11 may include a rotatable rotating rod, one end of the rotating rod being movably connected to the fixed seat 11, and the other end thereof being fixedly connected to the sliding seat 12. In this way, when the driving mechanism 13 drives the rotating rod to perform a circular movement, the sliding seat 12 can be driven to synchronously perform a circular movement.

In the present embodiment, the material of the sliding seat 12 is not specifically limited, and a corresponding material may be selected based on actual application requirements. For example, the material of the sliding seat 12 may include one or more of a plastic material, a metal material, an inorganic cementing material, and a wood material. In addition, the first charging inlet 15 and the second charging inlet 16 may be arranged on the sliding seat 12 by screwing, riveting, welding, etc. Therefore, the sliding seat 12 may be provided with a connecting member for connecting with the first charging inlet 15 and the second charging inlet 16. The type of the connecting member may be set based on the actual requirements of the connection between the sliding seat 12 and the first charging inlet 15 as well as the second charging inlet 16. It should be noted that the first charging inlet 15 may be arranged on the sliding seat 12 in a manner that is the same as or different from a manner in which the second charging inlet 16 is arranged on the sliding seat 12, which is not specifically limited herein.

In the present embodiment, the sliding seat 12 may include a member suitable for moving on the fixed seat 11. The specific construction of the member may be set based on a manner in which the sliding seat 12 moves relative to the fixed seat 11, and the member is not specifically limited herein. For example, when the sliding seat 12 is capable of a reciprocating movement in a certain direction on the fixed seat 11, the sliding seat 12 may include a sliding rail, and the fixed seat 11 may be provided with a roller, the sliding rail being capable of cooperating with the roller, such that the sliding seat 12 is capable of a reciprocating movement in a certain direction on the fixed seat 11; or, the sliding seat 12 may include a roller, and the fixed seat 11 may be provided with a sliding rail, the sliding rail being capable of cooperating with the roller, such that the sliding seat 12 is capable of a reciprocating movement in a certain direction on the fixed seat 11. When the sliding seat 12 is capable of a circular movement on the fixed seat 11, the sliding seat 12 may include a rotatable rotating rod, one end of the rotating rod being fixedly connected to the sliding seat 12, and the other end thereof being movably connected to the fixed seat 11. In this way, when the rotating rod is driven by the driving mechanism 13 to perform a circular movement, the sliding seat 12 can be driven to synchronously perform a circular movement.

In the present embodiment, the driving mechanism 13 may be configured to drive the sliding seat 12 to move, so as to control the movement of the first charging inlet 15 and the second charging inlet 16 arranged on the sliding seat 12. In some examples, the driving mechanism 13 may control the movement of the sliding seat 12 by means of motor driving, in which case, a motor may be provided in the driving mechanism 13, and the movement of the sliding seat 12 may be controlled by a driving force output by the motor. The driving mechanism 13 may also control the movement of the sliding seat 12 by means of magnetic drive, in which case, a coil may be arranged in the driving mechanism 13, and the sliding seat 12 may be provided with a magnetic substance with foreknown magnetism. When the sliding seat 12 needs to be controlled to be close to the driving mechanism 13, a current enabling magnetism of the coil to be opposite to the magnetism of the magnetic substance may be input to the coil, such that the sliding seat 12 is caused to move close to the driving mechanism 13 by taking advantage of the law of magnetism that unlike poles attract. When the sliding seat 12 needs to be controlled to be away from the driving mechanism 13, a current enabling the magnetism of the coil to be the same as the magnetism of the magnetic substance may be input to the coil, such that the sliding seat 12 is caused to move away from the driving mechanism 13 by taking advantage of the law of magnetism that like poles repel. The manner in which the driving mechanism 13 drives the sliding seat 12 to move is not specifically limited herein.

It should be noted that the driving mechanism 13 , by controlling the movement of the transmission mechanism 14, may control the sliding seat 12 to perform a reciprocating movement, and may also control the sliding seat 12 to perform a circular movement, such that the first charging inlet 15 or the second charging inlet 16 can be connected to the charger repeatedly for many times by controlling a position of the sliding seat 12.

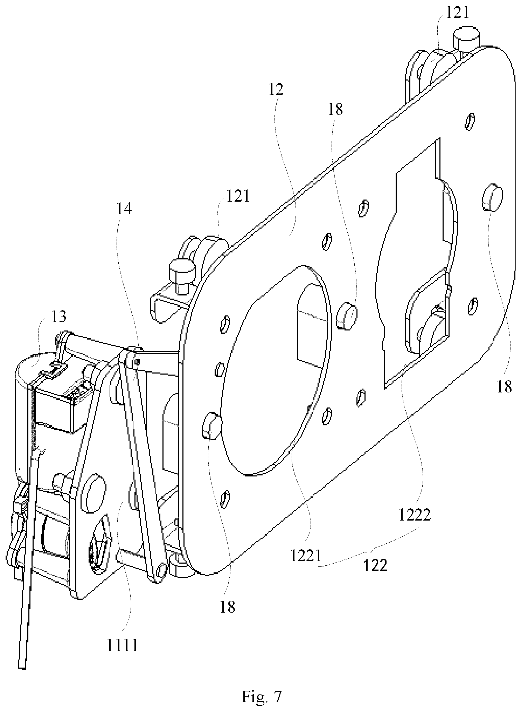

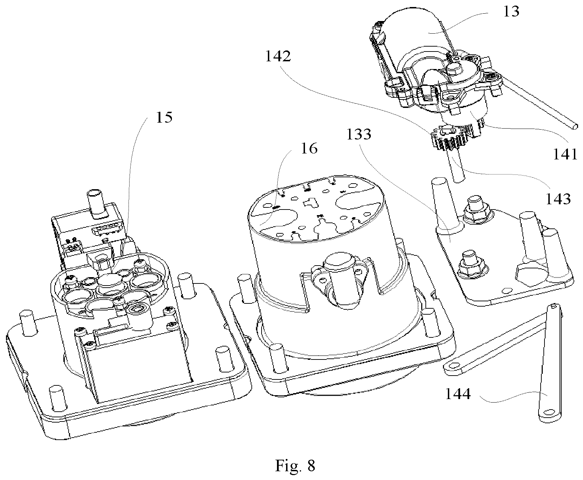

In some examples, as shown in Figs. 7 and 8, the transmission mechanism 14 may be connected to the sliding seat 12; the driving mechanism 13 may be arranged on the fixed seat 11; the transmission mechanism 14 is connected between the driving mechanism 13 and the sliding seat 12; and the driving mechanism 13 is configured to drive the transmission mechanism 14 to put the sliding seat 12 into movement along the preset trajectory relative to the fixed seat 11.

In the present embodiment, the driving mechanism 13 may include a driving motor. The driving motor may be a DC motor, an asynchronous motor, a synchronous motor, etc., and the type of the driving motor is not specifically limited herein.

In the present embodiment, the driving mechanism 13 may be connected with the transmission mechanism 14, and the driving mechanism 13 may drive the transmission mechanism 14 to move, so as to put the sliding seat 12 into movement along the preset trajectory relative to the fixed seat 11. The manner in which the driving mechanism 13 drives the transmission mechanism 14 to move is not specifically limited herein.

Further, the transmission mechanism 14 of the present embodiment may include a gear set and a connecting rod set. The gear set is connected with the driving mechanism 13 and the connecting rod set, respectively. The connecting rod set is connected to the sliding seat 12. The gear set is configured to rotate under the driving effect of the driving mechanism 13 to put the connecting rod set into movement, such that the first charging inlet 15 and the second charging inlet 16 move along the preset trajectory relative to the fixed seat 11. As shown in Fig. 8, the gear set may include a first gear 141 and a second gear 142. The first gear 141 may be connected to the output end of the driving mechanism 13, and may be engaged with the second gear 142. The connecting rod set may include a first connecting rod 143 and a second connecting rod 144. The first connecting rod 143 is fixedly connected to the second gear 142 (e.g., connected to a gear shaft of the second gear 142), and the second connecting rod 144 is rotatably connected to the first connecting rod 143 and the sliding seat 12, respectively. The first connecting rod 143 and the gear shaft of the second gear 142 may be in a one-piece molded structure, and the first connecting rod 143 and the second gear 142 may also be connected with each other by a fastener, such that the second gear 142 can drive the first connecting rod 143 to rotate. The specific connecting manner between the first connecting rod 143 and the second gear 142 is not specifically limited herein.

In the present embodiment, when the driving mechanism 13 drives the first gear 141 to rotate (e.g., when the driving mechanism 13 is a motor, a rotor of the motor is connected with the first gear 141, and when rotating, the rotor of the motor drives the first gear 141 to rotate), the first gear 141 drives the second gear 142 to rotate, and at the same time, the first connecting rod 143 connected to the second gear 142 rotates and further drives the second connecting rod 144 connected to the first connecting rod 143 to move. Then the sliding seat 12 is driven by the second connecting rod 144 to substantially translate, such that the first charging inlet 15 and the second charging inlet 16 arranged on the sliding seat 12 move relative to the fixed seat 11.

It should be noted that, in the present embodiment, the structural construction of the gear set is not limited to the cooperation between the first gear 141 and the second gear 142 as shown in Fig. 8, but can be specifically configured based on actual application scenarios (e.g., the number of gears, structural parameters, etc.), and even, the gear set may be replaced by other deceleration structures, such as a worm gear set. Similarly, the structural construction of the connecting rod set is also not limited to the cooperation between the first connecting rod 143 and the second connecting rod 144 as shown in Fig. 8, but can be specifically configured based on actual application scenarios (e.g., the number and shape of the connecting rod, etc.), or even, the connecting rod set may be replaced by a rotation-translation movement conversion structure, such as a rack and pinion, a cam structure, a rocker set, etc.

In the present embodiment, the first charging inlet 15 may include a fast charging inlet, a slow charging inlet, etc. The first charging inlet 15 may be connected to an external charger and receive electric energy delivered by the charger. The electric energy may be direct current or alternating current. The property of the electric power received at the first charging inlet 15 is not specifically limited herein.

In the present embodiment, the second charging inlet 16 may include a fast charging inlet, a slow charging inlet, etc. The second charging inlet 16 may be connected to an external charger and receive electric energy delivered by the charger. The electric energy may be direct current or alternating current. The property of the electric power received at the second charging inlet 16 is not specifically limited herein.

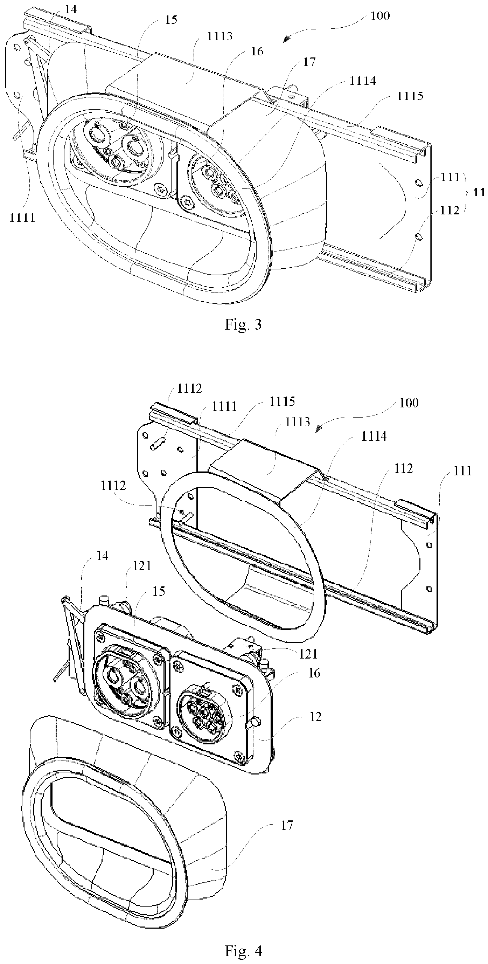

It should be noted that although the first charging inlet 15 and the second charging inlet 16 are of different types in the structural schematic diagrams of the vehicle charging base 100 as shown in Figs. 2 to 5, the structural schematic diagrams as shown in Figs. 2 and 3 should not be used as evidence limiting the embodiments of the present disclosure. Specifically, the first charging inlet 15 and the second charging inlet 16 may be of a same type or of different types. For example, the first charging inlet 15 and the second charging inlet 16 may be both fast charging inlets or may be both slow charging inlets; and when the first charging inlet 15 is a fast charging inlet, the second charging inlet 16 is a slow charging inlet.

In the present embodiment, when the first charging inlet 15 and the second charging inlet 16 are of different types, a user can select, based on a type of a charger corresponding to a currently available charging pile, a charging inlet corresponding to the type of the charger from the first charging inlet 15 and the second charging inlet 16 to satisfy charging needs of the vehicle 200 under different chargers.

In the present embodiment, when the first charging inlet 15 and the second charging inlet 16 are of a same type, the first charging inlet 15 may be used as a main charging inlet and the second charging inlet 16 may be used as a backup charging inlet. When the main charging inlet cannot be used (e.g., the charging inlet cannot complete handshake communication with a charging pile, the charging inlet cannot receive electric energy delivered by a charger, etc.), the backup charging inlet may be used as the main charging inlet to charge the vehicle 200.

In the present embodiment, the first charging inlet 15 and the second charging inlet 16 are both arranged on the sliding seat 12. The first charging inlet 15 and the second charging inlet 16 may be spaced apart by a distance. The distance between the first charging inlet 15 and the second charging inlet 16 may be set based on actual scenario requirements, and may be, for example, 5 cm, 6 cm, 7 cm, etc. In addition, the first charging inlet 15 and the second charging inlet 16 may be fixedly arranged on the sliding seat 12, and when the sliding seat 12 moves, the first charging inlet 15 and the second charging inlet 16 moves simultaneously and synchronously along with the sliding seat 12.

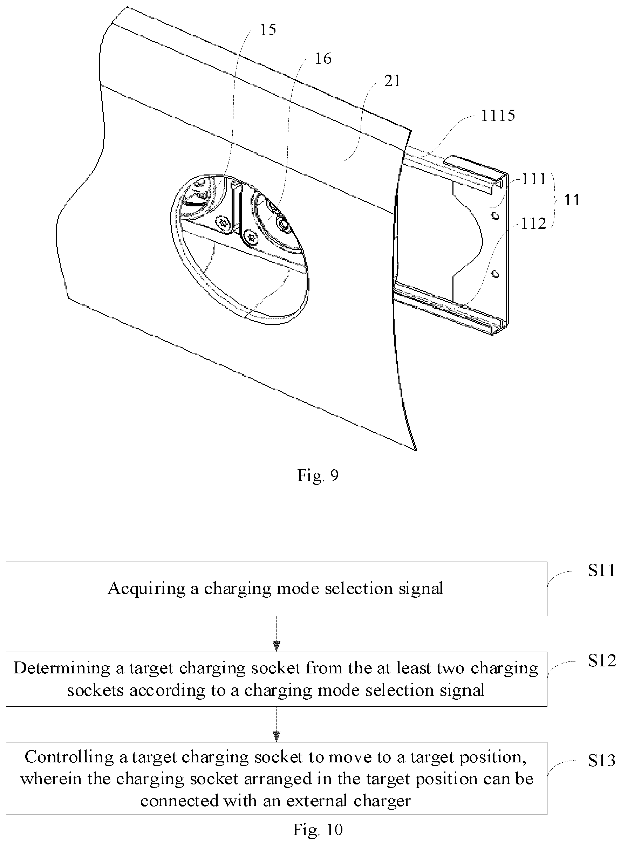

In the present embodiment, by using the vehicle charging base 100 including the fixed seat 11, the sliding seat 12, the driving mechanism 13, the transmission mechanism 14, the first charging inlet 15 and the second charging inlet 16, the sliding seat 12 can be enabled to move under the driving effect of the driving mechanism 13, and the first charging inlet 15 and the second charging inlet 16 arranged on the sliding seat 12 can be enabled to move along the preset trajectory relative to the fixed seat 11. Therefore, when the vehicle charging base 100 is arranged on the body of the vehicle 200, the vehicle 200 is equipped with two charging inlets, and only one opening corresponding to a size of the charging inlet is required to be reserved on the vehicle 200. This effectively reduces the size of the opening on the vehicle 200 and improves the aesthetic effect of the entire vehicle 200 (e.g., Fig. 9 shows a perspective structural diagram of the vehicle charging base 100 in a top view, in which case only one opening corresponding to a size of a charging inlet needs to be reserved). At the same time, there is no need to make a design specific to an opening on the vehicle 200 designed for two charging inlets, and it is only necessary to retain the original structure of the charging inlet part in the vehicle 200 under the original single charging inlet. Difficulty in designing the vehicle body structure of the vehicle 200 is thus reduced.

Further, as an implementation of the present embodiment, as shown in Fig. 3, the fixed seat 11 may include a supporting assembly 111 and a guiding member 112 connected to the supporting assembly 111. The sliding seat 12 slidingly cooperates with the guiding member 112, to allow the sliding seat 12 to move along a direction defined by the guiding member 112 when driven by the driving mechanism 13.

In the present embodiment, the material of the supporting assembly 111 may include one or more of a plastic material, a metal material, an inorganic cementing material, and a wood material. In addition, the supporting assembly 111 may be fixed to the body of the vehicle 200 by screwing, riveting, welding, etc. Therefore, the supporting assembly 111 may be provided with a fixing member for fixed connection with the body of the vehicle 200, and the type of the fixing member may be set based on actual requirements of the fixed connection between the supporting assembly 111 and the body of the vehicle 200.

In the present embodiment, the supporting assembly 111 may be a solid structure or a hollow structure, and the shape of the supporting assembly 111 is not specifically limited herein.

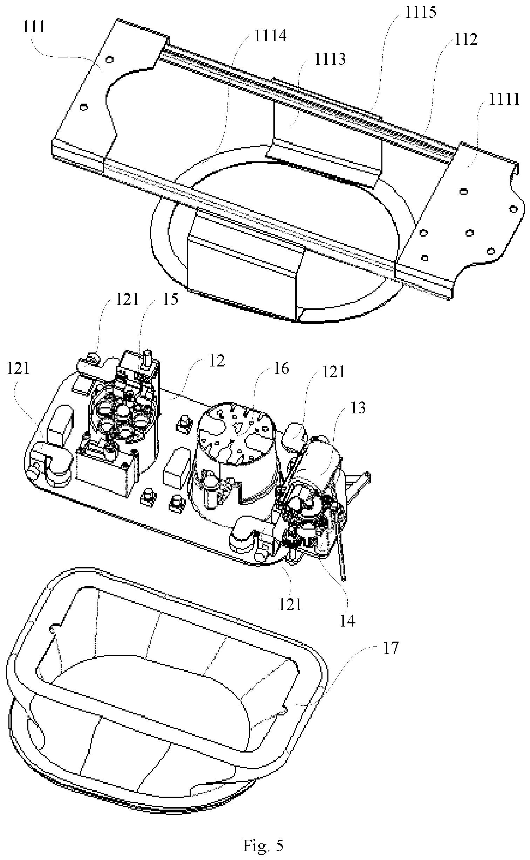

In some examples, when the supporting assembly 111 is a solid structure, the guiding member 112 may be arranged on a surface of the supporting assembly 111, in which case, the guiding member 112 may be a roller, a groove, etc., and a sliding member 121 cooperating with the guiding member 112 is arranged on the sliding seat 12. As shown in Figs. 4 and 5, when the supporting assembly 111 is a hollow structure, the supporting assembly 111 may be provided with an accommodating space configured to accommodate the sliding seat 12; the guiding member 112 may be arranged on a side, facing towards the accommodating space, of the supporting assembly 111; and at the same time, a sliding member 121 that cooperates with the guiding member 112 is arranged on the sliding seat 12.

In the present embodiment, the use of a solid structure for the supporting assembly 111 can improve durability of the vehicle charging base 100 of the present embodiment and a solid structure has the characteristic of being not easily damaged; and the use of a hollow structure for the supporting assembly 111can effectively reduce the material required for the vehicle charging base 100, reduce the cost of manufacturing the vehicle charging base 100, and decrease the weight of the vehicle 200 provided with the vehicle charging base 100 because of the low weight of the supporting assembly 111, thus reducing power consumption of the vehicle 200 and improving the driving range of the vehicle 200.

In some examples, the guiding member 112 may include a guiding rail structure, and meanwhile a sliding member 121 cooperating with the guiding rail structure may be arranged on the sliding seat 12. The guiding rail structure may be a protruding structure arranged on the supporting assembly 111, in which case, the sliding member 121 may be provided with a groove. The protruding structure may be used to cooperate with the groove, so that when the driving mechanism 13 drives the sliding seat 12 to move, the sliding seat 12 may move in a direction defined by the protruding structure.

In some examples, the guiding rail structure may be provided with a groove, and the groove is arranged in the supporting assembly 111, at this time, the sliding member 121 may be a protruding structure, the protruding structure may be used in cooperation with the groove, when the driving mechanism 13 drives the sliding seat 12 to move, the sliding seat 12 may move in a direction defined by the groove.

In some examples, as shown in Figs. 2 to 5, the supporting assembly 111 may include a bearing member 1111. The bearing member 1111 may be connected with the guiding member 112, and the bearing member 1111 may be configured to support the driving mechanism 13. The bearing member 1111 and the guiding member 112 may be in a one-piece molded structure, or the bearing member 1111 may be fixedly connected with the guiding member 112 by screwing, riveting, welding, etc. In addition, the driving mechanism 13 may be fixedly arranged on the bearing member 1111, and the driving mechanism 13 and the bearing member 1111 may be provided with respective fasteners cooperating with each other. For example, a nut may be arranged in the driving mechanism 13, and a bolt may be arranged in the bearing member 1111. The manner of mutual cooperation and fixation between the driving mechanism 13 and the bearing member 1111 is not specifically limited herein.

Further, as an implementation of the present embodiment, as shown in Figs. 2 to 5, the supporting assembly provided in the present embodiment may further include a first supporting member 1115, a second supporting member 1113, and an external member 1114. The first supporting member 1115 is fixedly connected to the bearing member 1111, and the second supporting member 1113 is fixedly connected between the first supporting member 1115 and the external member 1114. The first supporting member 1115 may be configured to support the sliding seat 12; the second supporting member 1113 is configured to support the external member 1114; and the external member 1114 is adaptive to accommodate a port of an external charger, such that the charger is connected to the first charging inlet 15 or the second charging inlet 16.

It should be noted that, when the guiding member 112 includes a groove, the groove may be arranged in the first supporting member 1115.

In the present embodiment, the first supporting member 1115 may be fixedly connected to the bearing member 1111 by screwing, riveting, welding, etc., and the connecting manner between the first supporting member 1115 and the bearing member 1111 is not specifically limited herein. The second supporting member 1113 may be fixedly connected to the first supporting member 1115 and the external member 1114 by screwing, riveting, welding, etc., and the connecting manner between the second supporting member 1113 and the first supporting member 1115 as well as the external member 1114 is not specifically limited herein.

In some examples, the vehicle charging base 100 may include a sealing assembly 17. The sealing assembly 17 is connected with the fixed seat 11, and is adaptive to be arranged between the fixed seat 11 and the vehicle body.

In the present embodiment, the sealing assembly 17 may be made of a hard sealing material or a soft sealing material. When the sealing assembly 17 is made of a hard sealing material, the material of the sealing assembly 17 may include a metal, a hard plastic (e.g., phenolic plastic, polyurethane plastic, epoxy plastic, unsaturated polyester plastic, etc.), etc. When the sealing assembly 17 is made of a soft sealing material, the material of the sealing assembly 17 may include polyethylene, polypropylene, polystyrene, etc.

In the present embodiment, one end of the sealing assembly 17 may be fixed to the fixed seat 11, and the other end of the sealing assembly 17 may be fixed to the vehicle body, so that the charging inlet inside the sealing assembly 17 is protected.

In the present embodiment, the external member 1114 may be fixedly connected to the body of the vehicle 200. When the external member 1114 is fixedly connected to the body of the vehicle 200, one end of the sealing assembly 17 may be connected to the first supporting member 1115, and the other end of the sealing assembly 17 may be connected to the external member 1114. In addition, when the sealing assembly 17 is a sealing sleeve, the sealing sleeve may be sleeved between the first supporting member 1115 and the external member 1114.

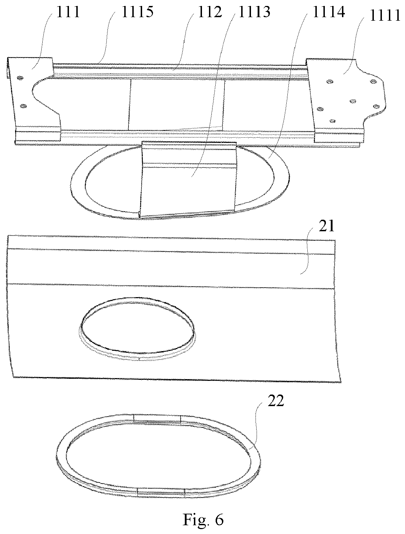

Further, as shown in Fig. 6, the vehicle charging base 100 provided in the present embodiment may also include a vehicle body covering member 21 and a sealing ring 22. The vehicle body covering member 21 is configured to cover a body surface of the vehicle 200, and may be connected to the external member 1114. The sealing ring 22 is connected to the vehicle body covering member 21 and the external member 1114, respectively, and is configured to fill a gap between the vehicle body covering member 21 and the external member 1114.

In the present embodiment, the vehicle body covering member 21 may be made of a material the same as or different from a body shell of the vehicle, which is not specifically limited herein. In addition, the sealing ring 22 may be made of a hard sealing material or a soft sealing material. When the sealing ring 22 is made of a hard sealing material, the material of the sealing ring 22 may include a metal, a hard plastic (e.g., phenolic plastic, polyurethane plastic, epoxy plastic, unsaturated polyester plastic, etc.) and the like. When the sealing ring 22 is made of a soft sealing material, the material of the sealing ring 22 may include polyethylene, polypropylene, polystyrene, etc.

In the present embodiment, by arranging the sealing ring 22 and the vehicle body covering member 21, rainwater and dust can be prevented from entering the vehicle charging base 100, to avoid contamination and damage to charging inlets.

Further, as an implementation of the present embodiment, as shown in Fig. 4, the supporting assembly 111 may further include at least two limiting members 1112. The at least two limiting members 1112 are spaced apart along a movement direction of the transmission mechanism 14. The at least two limiting members 1112 may be configured to limit a range within which the driving mechanism 13 drives the sliding seat 12 to move.

In some examples, the at least two limiting members 1112 may be arranged on the bearing member 1111 of the supporting assembly 111, and the at least two limiting members 1112 may be arranged on the bearing member 1111 by screwing, riveting, welding, etc. In some examples, the at least two limiting members 1112 may be of a same shape or of different shapes. For example, one of the limiting members 1112 may be a cylinder, and the other limiting member 1112 may be a bar-shaped protruding structure, and the shapes of the at least two limiting members 1112 are not specifically limited herein.

Further, to limit the range of movement of the sliding seat 12 on the fixed seat 11, the range of movement of the sliding seat 12 may be controlled by limiting a range of movement of the transmission mechanism 14. In some examples, as shown in Fig. 4, when the transmission mechanism 14 includes a connecting rod, the at least two limiting members 1112 may be arranged at two sides of the connecting rod, such that the connecting rod may move between the at least two limiting members 1112.

In the present embodiment, the driving mechanism 13 may further include a driving mechanism mounting assembly. The driving mechanism mounting assembly may be fixedly arranged on the bearing member 1111, and the driving mechanism 13 may be mounted on the driving mechanism mounting assembly. That is to say, in the present embodiment, the driving mechanism 13 may be fixedly connected with the bearing member 1111 through the driving mechanism mounting assembly.

In the present embodiment, a fixing member for fixing the driving mechanism 13 may be arranged on the driving mechanism mounting assembly; and the specific construction of the fixing member may be determined based on a connecting manner between the driving mechanism mounting assembly and the driving mechanism 13, and the construction of the fixing member is not specifically limited herein. A fixing member for fixing the driving mechanism mounting assembly to the bearing member 1111 may be arranged on the driving mechanism mounting assembly; and the specific construction of the fixing member may be determined based on a connecting manner between the driving mechanism mounting assembly and the bearing member 1111, and the construction of the fixing member is not specifically limited herein.

Further, as an implementation of the present embodiment, as shown in Fig. 7, the sliding seat 12 may include a seat body 122 and a sliding member 121. The sliding member 121 is slidably arranged in a guiding rail structure. The first charging inlet 15 and the second charging inlet 16 may be arranged in the seat body 122.

In the present embodiment, the material of the seat body 122 may include one or more of a plastic material, a metal material, an inorganic cementing material, and a wood material, and the material of the seat body 122 is not specifically limited herein. In addition, the sliding member 121 may be arranged on the seat body 122 by screwing, riveting, welding, etc., and the connecting manner between the sliding member 121 and the seat body 122 is not specifically limited herein.

In the present embodiment, the sliding member 121 may include a member suitable for sliding in the guiding rail structure, and is configured based on a manner in which the sliding seat 12 moves relative to the fixed seat 11. The member is not specifically limited herein. For example, the sliding member 121 may include a roller, and the guiding rail mechanism may include a sliding rail, the sliding rail being capable of cooperating with the roller, such that the sliding member 121 can perform a reciprocating movement in a certain direction in the guiding rail structure.

In some examples, as shown in Fig. 7, the seat body 122 of the sliding seat 12 may include a first mounting part 1221 and a second mounting part 1222. The first mounting part 1221 and the second mounting part 1222 are fixedly connected with each other. The first charging inlet 15 is relatively fixedly arranged in the first mounting part 1221, and the second charging inlet 16 is relatively fixedly arranged in the second mounting part 1222.

In the present embodiment, the first mounting part 1221 and the second mounting part 1222 may be in a one-piece molded structure or may be structural units independent of the seat body 122. In addition, the first mounting part 1221 and the second mounting part 1222 may be of a same structure or of different structures. Specifically, when the first charging inlet 15 and the second charging inlet 16 are of a same model, the first mounting part 1221 and the second mounting part 1222 may be of a same structure; and when the first charging inlet 15 and the second charging inlet 16 are of different models, the first mounting part 1221 and the second mounting part 1222 may be of different structures. In other words, specific structures of the first mounting part 1221 and the second mounting part 1222 should be configured based on actual situations of the first charging inlet 15 and the second charging inlet 16.

Further, as an implementation of the present embodiment, as shown in Fig. 7, the vehicle charging base 100 provided in the present embodiment may further include a position sensor 18. The position sensor 18 may be arranged in the sliding seat 12, and is configured to provide position reference information when an external charger is connected with a charging port.

In the present embodiment, the position sensor 18 may be an infrared sensor, a laser sensor, a magnetic sensor, etc., and the type of the position sensor 18 is not specifically limited herein. In addition, provided may be one or more position sensors 18, and the number of the position sensor 18 is not specifically limited herein. In addition, the position sensor 18 may be arranged in the sliding seat 12, the fixed seat 11, the body of the vehicle 200, etc., and the position for arranging the position sensor 18 is not specifically limited herein.

It should be noted that the position sensor 18 may be arranged in the fixed seat 11 (not shown in the figures) and may also be arranged in the body of the vehicle 200 (not shown in the figures). In an illustrated embodiment, three position sensors 18 are provided, and the three position sensors 18 are all arranged on a side, facing towards the external member 1114, of the sliding seat 12. Two of the position sensors 18 are respectively arranged at two ends of the sliding seat 12, and the other position sensor 18 is arranged between the first mounting part 122 and the second mounting part 123. With such an arrangement, positions of the first charging inlet 15 and the second charging inlet 16 can be clearly characterized by the three position sensors 12. In addition, a plurality of position sensors 18 may also be arranged in a preset circumference and arranged around a charging sensor at a specified interval.

In some examples, when operating, the position sensor 18 may provide position reference information for a connection between a charger and a charging port, to ensure that the charger and the charging port can be accurately connected, such that the vehicle charging base 100 provided with the position sensor 18 is particularly applicable to charging piles that can automatically charge vehicles, making it more convenient to charge vehicles.

Referring again to Fig. 1, an embodiment of the present disclosure further provides a vehicle 200. The vehicle 200 includes a vehicle body 201 and the vehicle charging base 100 provided in the above embodiment. The vehicle charging base 100 is arranged in the vehicle body 201.

In the present embodiment, the vehicle includes two charging inlets, and only one opening corresponding to a size of the charging inlet needs to be reserved on the vehicle, which effectively reduces the size of the opening on the vehicle, and improves the aesthetic effect of the entire vehicle. At the same time, there is no need to make a design specific to an opening on a vehicle designed for two charging inlets, and it is only necessary to retain the original structure of the charging inlet part in the vehicle under the original single charging inlet. Difficulty in designing the vehicle body structure is thus reduced.

Referring to Fig. 10, an embodiment of the present disclosure provides a vehicle charging base control method. The vehicle charging base control method may be applied to a vehicle charging base including at least two movable charging inlets that are spaced apart from each other. The vehicle charging inlet control method may include the following steps S11 to S13.

In step S11, a charging mode selection signal is acquired.

In the present embodiment, the charging mode selection signal may be used to characterize a charging mode currently required for a vehicle. For example, the charging mode may include a fast charging mode, a slow charging mode, etc.

In the present embodiment, the charging mode selection signal may be acquired in a variety of ways, and the acquisition manner of the charging mode selection signal is not specifically limited herein.

In some examples, the charging mode selection signal input by a user may be acquired through a vehicle-mounted control unit. The vehicle-mounted control unit may be a vehicle-mounted display screen, a vehicle-mounted button, a vehicle-mounted key, etc. An audio signal may also be acquired through a voice module and the charging mode selection signal may be obtained based on a recognition result of the audio signal. A microphone may be provided in the vehicle to receive the audio signal, and an offline voice recognition unit may be provided in the vehicle to recognize the audio signal to obtain a recognition result; or, the audio signal may be processed by way of cloud voice recognition, and the recognition result may be received through wireless communication. Furthermore, a communication connection with the vehicle may be established through an intelligent device (e.g., a cell phone, a tablet, a laptop, etc.), and the charging mode selection signal may be input from the intelligent device. The charging mode selection signal may also be sent to the vehicle via a remote key configured to remotely control the vehicle.

In some examples, a wireless communication connection may be established between the vehicle and a charging pile. The wireless communication means may include Bluetooth, Zigbee, radio frequency, etc. The vehicle may receive a charging signal sent by the charging pile. The charging signal may be used to characterize a charging mode currently available to the charging pile, and the charging mode selection signal may be determined based on the charging signal.

In step S12, a target charging inlet is determined from the at least two charging inlets based on the charging mode selection signal.

In the present embodiment, relationships between the charging mode selection signal and the charging inlets may be preset. For example, in the case that the charging inlets include a first charging inlet and a second charging inlet, the charging mode selection signal "A" is preset to be associated with the first charging inlet, and the charging mode selection signal "B" is preset to be associated with the second charging inlet. When the charging mode selection signal is "A", the first charging inlet is used as the target charging inlet. The first charging inlet may be a fast charging inlet and the second charging inlet may a slow charging inlet.

In step S13, the target charging inlet is controlled to move to a target position. The charging inlet in the target position is capable of being connected with an external charger.

In the present embodiment, the target position may be a position at which the charging inlet can be connected to a charger. For example, when the vehicle charging base control method provided in the present embodiment is applied to the vehicle charging inlet provided in the above embodiment, the target position may be a position of a projection formed on the fixed seat by the external member along a direction of insertion of a charger when the charger is inserted into the external member. The target position may be marked based on the fixed seat 11, or the target position may be marked based on a travel position of the driving mechanism 13.

In the present embodiment, since the multiple charging inlets are spaced apart from each other, when the target charging inlet is in the target position, it can be connected to an external charger; the charger delivers electric energy to the vehicle through the target charging inlet; and at the same time, among the multiple charging inlets, the charging inlets other than the target charging inlet are located outside the target position and therefore do not interfere with the connection between the target charging inlet and the charger.

It should be noted that the vehicle charging base control method provided in the present embodiment can be applied to the vehicle provided in the above embodiment, and the vehicle charging base control method can be used to control the driving mechanism in the vehicle charging base in the vehicle, thereby realizing control of the multiple charging inlets to simultaneously move relative to the fixed seat by controlling movement of the driving mechanism.

In the present embodiment, through the implementation of the above steps S11 to S13, the charging inlets can be controlled to move, so that the target charging inlet needs to be connected to the charger is controlled to the target position and is exposed, allowing an easy connection between the target charging inlet and the charger. In this way, when a vehicle is provided with multiple charging inlets, only one opening corresponding to a size of the charging inlet needs to be reserved on the vehicle, which effectively reduces the size of the opening on the vehicle and improves the aesthetic effect of the entire vehicle (Fig. 9 shows a perspective structural diagram of a vehicle charging base in a top view, in which case only one opening corresponding to the size of the charging inlet needs to be reserved). Furthermore, there is no need to make a design specific to an opening on a vehicle designed for two charging inlets, and it is only necessary to retain the original structure of the charging inlet part in the vehicle under the original single charging inlet. Difficulty in designing a vehicle body structure is thus reduced.

An embodiment of the present disclosure further provides a vehicle charging base control method. The vehicle charging base control method can be applied to a vehicle charging base including at least two movable charging inlets. The vehicle charging base control method may include the following steps S21 to S23. The vehicle charging base control method provided in the present embodiment may include steps that are the same as or similar to those steps in the above embodiment. Reference may be made to the foregoing description for the execution of these same or similar steps, which will not be repeated redundantly in the present specification.

In step S21, a charging mode selection signal is acquired.

In step S22, a target charging inlet is determined from at least two charging inlets based on the charging mode selection signal.

In step S23, the target charging inlet is controlled to move to a target position. The charging inlet in the target position is capable of being connected with an external charger.

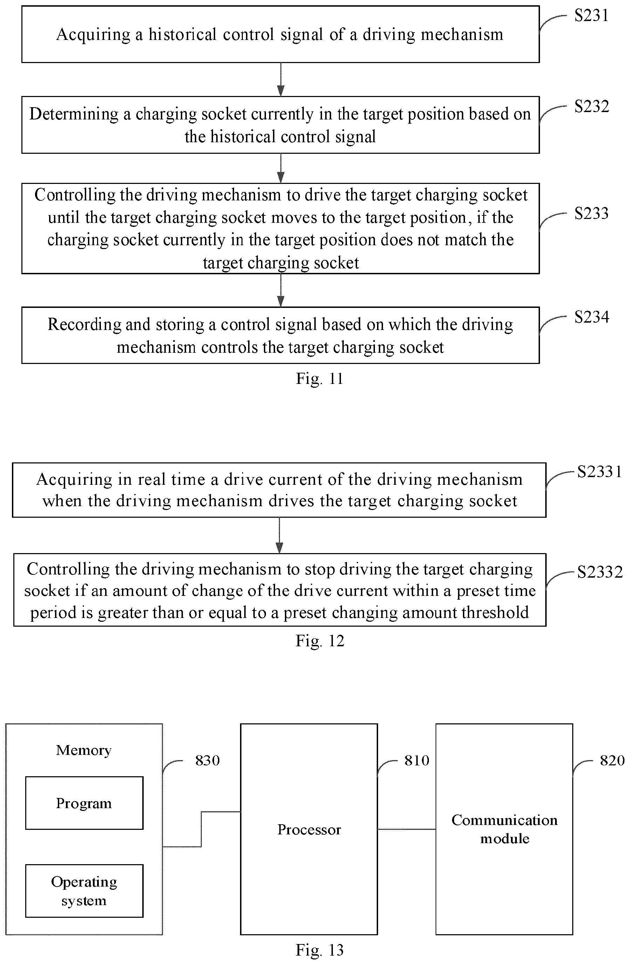

Further, as an implementation of the present embodiment, in order to reduce sensors configured to detect positions of respective charging inlets on a vehicle, a charging inlet currently in the target position may be determined based on a historical control signal of a driving mechanism, and further a position of the target charging inlet may be controlled based on the charging inlet currently in the target position, as shown in Fig. 11. The vehicle charging base may also include a driving mechanism. The above step S23 may include the following steps S231 to S233.

In step S231, a historical control signal of a driving mechanism including a historical signal for controlling a charging inlet is acquired.

In the present embodiment, the historical control signal may include a historical signal through which a driving mechanism controls a movement of a charging inlet, and the historical control signal may be control log data showing controlling of the charging inlet by the driving mechanism. In addition, the historical control signal may be pre-stored in a memory of the vehicle, so that the historical control signal can be directly extracted from the memory. The historical control signal may also be pre-stored in a cloud server, so that the historical control signal can be acquired from the cloud server.

In step S232, a charging inlet currently in the target position is determined based on the historical control signal.

In the present embodiment, since the historical control signal may include control log data for controlling a charging inlet, a previous movement process of the charging inlet may be acquired based on the control log data. In other words, a charging inlet in the target position when the vehicle is charged last time may be acquired from the log data.

In step S233, if the charging inlet currently in the target position does not match with the target charging inlet, the driving mechanism is controlled to drive the target charging inlet until the target charging inlet is in the target position.

In the present embodiment, multiple manners in which the driving mechanism drives a target charging inlet are available, and specific manners may be set based on actual scenarios. Specifically, for the manner in which the driving mechanism drives a target charging inlet in the present embodiment, refer to the description of the vehicle charging base in the above embodiments, which is not repeated redundantly herein.

In the present embodiment, if the charging inlet currently in the target position matches with the target charging inlet, a current position of the target charging inlet currently in the target position may be maintained without controlling the charging inlet to move.

In the present embodiment, the charging inlet currently in the target position may be determined based on the historical control signal, to reduce sensors configured to detect positions of respective charging inlets on the vehicle, making it unnecessary to monitor positions of multiple charging inlets in real time. Further, when the charging inlet currently in the target position matches with the target charging inlet, the driving mechanism does not need to operate, which reduces consumption of electric energy and improves switching efficiency of charging inlets.

Further, to protect the driving mechanism, when the driving mechanism drives a plurality of charging inlets to reach a limiting position, the driving mechanism is controlled to stop driving the target charging inlets, as shown in Fig. 12. The above step S233 may include the following steps S2331 to S2332.

In step S2331, a drive current of the driving mechanism is acquired in real time when the driving mechanism drives the target charging inlet.

In the present embodiment, the driving mechanism may include a driving motor, and the drive current may be a current flowing through a motor coil in the driving motor. A current detector may be provided in a line communicating with the motor coil, and a current of the motor coil may be obtained based on a detection result of the current detector.

In step S2332, the driving mechanism is controlled to stop driving the target charging inlet if a changing amount of the current within a preset time period is greater than or equal to a preset changing amount threshold.

In the present embodiment, the preset time period may be determined based on experiences. For example, the preset time period may be 0.2 s, 0.3 s, 0.5 s, etc.

In the present embodiment, when the changing amount of the current within the preset time period is greater than the preset changing amount threshold, it may indicate that the driving motor is blocked, in which case the current flowing through the coil of the driving motor usually increases. It may therefore be determined whether the driving motor is blocked based on the changing amount of the current. If the driving motor is blocked, the driving mechanism is controlled to stop outputting a driving force, to avoid damage to the driving motor.

It should be noted that when the vehicle charging base control method provided by the present embodiment is applied to the vehicle provided in the above embodiment, if the driving motor is blocked, it may indicate that the sliding seat is in a limiting position at this time and is unable to move in a direction in which the driving motor currently drives the connecting rod assembly, and that at this moment the driving mechanism may be controlled to stop outputting a driving force.

Further, to enable subsequent charging using the target charging inlet, the control signal based on which the driving mechanism controls the target charging inlet may be recorded and stored, as shown in Fig. 11. After the above step S233, the following step S234 may further be included.

In step S234, a control signal based on which the driving mechanism controls the target charging inlet is recorded and stored.

In the present embodiment, the control signal may include a signal based on which the driving mechanism controls the charging inlet to move, and the signal may be used to characterize a process in which the driving mechanism controls the target charging inlet. For example, the control signal may be stored to a vehicle log database, a cloud server, etc.

To make an application process of the vehicle charging base control method provided in the embodiments of the present disclosure to be understood in clearer way, the following example is given to illustrate the vehicle charging base control method. When a charging mode selection signal is received, a target charging inlet is determined based on the charging mode selection signal. A historical control signal of a driving mechanism is acquired, and a charging inlet currently in a target position is determined based on the historical control signal. It is determined whether the charging inlet currently in the target position matches with the target charging inlet. If the charging inlet currently in the target position matches with the target charging inlet, a cover of the charging inlet is controlled to open. When the cover of the charging inlet fully opens, a position sensor is controlled to enter an operating state, and at the same time, a charging pile enters a charging adaptation state. A connecting action between a charger and the target charging inlet is completed by means of an automatic charging robot and the position sensor, or the connecting action between the charger and the target charging inlet is completed manually. When the connecting action between the charger and the target charging inlet is completed, the position sensor is controlled to enter a dormant state, and when the charging is completed and a connection disconnecting action between the charger and the target charging inlet is completed, the cover of the charging inlet is controlled to close. If the charging inlet currently in the target position does not match with the target charging inlet, a driving signal is sent to the driving motor, so that multiple charging inlets are controlled to move until the target charging inlet is in the target position, and meanwhile a control signal based on which the driving motor controls the target charging inlet is recorded and stored, and a cover of the charging inlet is controlled to open. When the cover of the charging inlet completely opens, the position sensor is controlled to enter an operating state, and at the same time, the charging pile enters a charging adaptation state. A connection action between the charger and the target charging inlet is completed by means of an automatic charging robot and the position sensor, or the connection action between the charger and the target charger is completed manually. When the connection action between the charger and the target charging inlet is completed, the position sensor is controlled to enter a dormant state, and when charging is completed and a connection disconnecting action between the charger and the target charging inlet is completed, the cover of the charging inlet is controlled to close.

An embodiment of the present disclosure further provides a vehicle charging base control device. The vehicle charging base control device can be applied to a vehicle charging base including at least two movable charging inlets that are spaced apart from each other. The vehicle charging base control device includes a charging mode selection signal acquisition module, a target charging inlet acquisition module, and a socket controlling module. The charging mode selection signal acquisition module is configured to acquire a charging mode selection signal. The target charging inlet acquisition module is configured to determine a target charging inlet from at least two charging inlets based on the charging mode selection signal. The socket controlling module is configured to control the target charging inlet to move to a target position. The charging inlet in the target position is capable of being connected to an external charger.

Further, as an implementation of the present embodiment, the vehicle charging base may include a driving mechanism, and the socket controlling module may include a historical control signal acquisition unit, a charging inlet determining unit, and a charging inlet controlling unit. The historical control signal acquisition unit is configured to acquire a historical control signal of the driving mechanism. The charging inlet determining unit is configured to determine a charging inlet currently in the target position based on the historical control signal. The charging inlet controlling unit is configured to control the driving mechanism to drive the target charging inlet until the target charging inlet is in the target position if the charging inlet currently in the target position does not match with the target charging inlet.

Further, as an implementation of the present embodiment, the charging inlet controlling unit may include a drive current acquisition sub-unit and a charging inlet controlling sub-unit. The drive current acquisition sub-unit is configured to acquire a drive current of the driving mechanism in real time when the driving mechanism drives the target charging inlet. The charging inlet control sub-unit is configured to control the driving mechanism to stop driving the target charging inlet if a changing amount of the current within a preset time period is greater than or equal to a preset changing amount threshold.

Further, as an implementation of the present embodiment, the vehicle charging inlet switching device provided in the present embodiment may further include a control signal recording and storage module. The control signal recording and storage module is configured to record and store a control signal based on which the driving mechanism controls the target charging inlet.

Those skilled in the art may appreciate that, for the convenience and brevity of description, for a specific operating process of each module in the above-described device, reference may be made to the corresponding process in the aforementioned embodiment about the vehicle charging base control method, which will not be repeated redundantly herein.

In the embodiments provided in the present disclosure, the coupling or direct coupling or communication connection between modules shown or discussed may be indirect coupling or communication connection through some interfaces, devices or modules, and may be in electrical, mechanical or other forms.

In addition, functional modules in each embodiment of the present disclosure may be integrated in a processing module, or may physically exist separately, or two or more of the modules may be integrated in a module. The above integrated module may be implemented either in a form of hardware or in a form of a software functional module.

Referring to Fig. 13, a vehicle provided by an embodiment of the present disclosure is shown. The vehicle includes a vehicle charging base having a plurality of movable charging inlets that are spaced apart from each other. The vehicle may also include a processor 810, a communication module 820, a memory 830, and a bus. The processor 810, the communication module 820, and the memory 830 are interconnected to each other and communicate with each other via the bus. The bus may be an ISA bus, a PCI bus, an EISA bus, or a CAN bus. The bus may be classified into an address bus, a data bus, a control bus, etc.

The memory 830 is configured to store a program. Specifically, the memory 830 may be configured to store a software program as well as various data. The memory 830 may primarily include a program storage area and a data storage area. The program storage area may store an application program required to operate at least one function. The program may include a program code which includes computer operating instructions. In addition to storing programs, the memory 830 may also temporarily store messages and the like that need to be sent by the communication module 820. The memory 830 may include a high-speed RAM memory and may also include a non-volatile memory, such as at least one solid state disk (SSD).

The processor 810 is configured to execute the program stored in the memory 830. The program, when executed by the processor, implements the steps of the vehicle charging base control method in each of the above embodiments.

An embodiment of the present disclosure further provides a computer-readable storage medium storing thereon a computer program. The computer program, when executed by a processor, implements each step of the above-mentioned embodiments of the vehicle charging base control methods, and can achieve the same technical effect, which is not repeated herein to avoid redundancy. The computer-readable storage medium may be, for example, a read-only memory (ROM), a random access memory (RAM), an SSD, an electrically erasable programmable read only memory (EEPROM), or a flash memory (Flash).

It should be noted that in the text, the terms "include", "comprise" or any other variants thereof are intended to cover non-exclusive inclusion, such that a process, a method, an article, or a device including a list of elements includes not only those listed elements, but also other elements not expressly listed, or elements inherent to such process, method, article, or device. Without further limitation, an element as defined by the statement "including/comprising a ......" does not preclude the existence of any additional identical element in a process, a method, an article, or a device including that element.

From the above description of the embodiments, those skilled in the art can clearly understand that the methods of the above embodiments can be implemented by means of software and a necessary general-purpose hardware platform, or of course can also be implemented by means of hardware, with, however, in many cases, the former being a better implementation. Based on such understanding, the technical solutions of the present disclosure, in essence, or the part that contributes to the prior art, may be embodied in the form of a software product. The computer software product is stored in a storage medium (e.g., ROM/RAM, SSD, Flash) and includes a number of instructions to enable a terminal (which may be a cell phone, a computer, a server, an air conditioner, or a network device, etc.) to perform the methods of various embodiments of the present disclosure.

The embodiments of the present disclosure are described above in combination with the accompanying drawings. However, the present disclosure is not limited to the above specific embodiments which are merely exemplary rather than restrictive. Those skilled in the art, inspired by the present disclosure, may make many other variations without departing from the spirit and the protection scope of the claims of the present disclosure, all of which shall fall within the protection of the present disclosure.

## Claims

1. A vehicle charging base, comprising:
a fixed seat, adaptive to be fixed to a body of a vehicle;
a sliding seat, movably arranged on the fixed seat;
a driving mechanism, arranged on the fixed seat;
a transmission mechanism, movably connected between a power output end of the driving mechanism and the sliding seat; and
a first charging inlet and a second charging inlet, wherein the first charging inlet and the second charging inlet are both arranged on the sliding seat, and the driving mechanism is configured to drive the transmission mechanism to put the sliding seat into movement, such that the first charging inlet and the second charging inlet move along a preset trajectory relative to the fixed seat.

2. The vehicle charging base according to claim 1, wherein the driving mechanism comprises a motor or a magnetic driving means.

3. The vehicle charging base according to claim 1, wherein the fixed seat includes a supporting assembly and a guiding member connected to the supporting assembly, the sliding seat configured to move along a direction defined by the guiding member when driven by the driving mechanism, and wherein the supporting assembly includes a first supporting member fixedly connected to a bearing member and configured to support the sliding seat, an external member configured to accommodate a port of an external charger, and a second supporting member fixedly connected between the first supporting member and the external member and configured to support the external member.

4. The vehicle charging base according to claim 1, wherein the transmission mechanism comprises a gear set and a connecting rod set, wherein the gear set is connected to the driving mechanism and the connecting rod set, respectively; the connecting rod set is connected to the sliding seat; the gear set is configured to rotate under a driving effect of the driving mechanism to put the connecting rod set into movement, such that the first charging inlet and the second charging inlet move along the preset trajectory relative to the fixed seat.

5. The vehicle charging base according to claim 1, wherein the fixed seat comprises at least two limiting members, the at least two limiting members being arranged apart along a movement direction of the transmission mechanism.

6. The vehicle charging base according to claim 1, further comprising a sealing assembly, wherein the sealing assembly is connected to the fixed seat, and is adaptive to be arranged between the fixed seat and the body of the vehicle.

7. The vehicle charging base according to claim 1, wherein the sliding seat comprises a first mounting part and a second mounting part, wherein the first mounting part and the second mounting part are fixedly connected with each other; the first charging inlet is relatively fixedly arranged in the first mounting part; and the second charging inlet is relatively fixedly arranged in the second mounting part.

8. The vehicle charging base according to any of claims 1 to 7, further comprising a position sensor, wherein the position sensor is arranged on the sliding seat, and is configured to provide position reference information when an external charger is connected with the charging inlet.

9. The vehicle charging base according to claim 7, further comprising three position sensors, two of which are respectively arranged at two ends of the sliding seat, and the other arranged between the first mounting part and the second mounting part.

10. A vehicle charging base control method, applicable to a vehicle charging base comprising at least two movable charging inlets, wherein the vehicle charging base control method comprises:
acquiring a charging mode selection signal;
determining a target charging inlet from the at least two charging inlets based on the charging mode selection signal; and
controlling the target charging inlet to move to a target position, wherein a charging inlet in the target position is capable of being connected with an external charger.

11. The vehicle charging base control method according to claim 10, wherein the vehicle charging base comprises a driving mechanism connected to the at least two charging inlets, and controlling the target charging inlet to move to a target position comprises:
acquiring a historical control signal of the driving mechanism, wherein the historical control signal comprises a historical signal based on which a charging inlet is controlled to move;
determining a charging inlet currently in the target position based on the historical control signal; and
controlling the driving mechanism to drive the target charging inlet until the target charging inlet moves to the target position, if the charging inlet currently in the target position does not match with the target charging inlet.

12. The vehicle charging base control method according to claim 8, wherein controlling the driving mechanism to drive the target charging inlet until the target charging inlet moves to the target position comprises:
acquiring in real time a drive current of the driving mechanism when the driving mechanism drives the target charging inlet; and
controlling the driving mechanism to stop driving the target charging inlet if an amount of change of the drive current within a preset time period is greater than or equal to a preset changing amount threshold.

13. A vehicle, comprising a vehicle body and the vehicle charging base according to any of claims 1 to 9, wherein the vehicle charging base is arranged in the vehicle body.

14. A vehicle, comprising a vehicle charging base having at least two movable charging inlets, wherein the vehicle further comprises:
a memory;
one or more processors, coupled with the memory; and
one or more programs, wherein the one or more processors are stored in the memory, configured to be executed by the one or more processors, and configured to implement the vehicle charging base control method according to any of claims 10 to 12.
